# EUROPEAN PATENT SPECIFICATION

(11) **EP 2 213 560 B1**
(45) Date of publication and mention of the grant of the patent: **29.06.2011**
(21) Application number: 09001349.1
(22) Date of filing: 30.01.2009
(51) Int. Cl.: B62J 31/00, B62J 35/00

(54) **A motorcycle wherein at least two liquid tanks are located, reciprocally disposed and shaped according to an improved layout**
Motorrad, wo mindestens zwei Flüssigkeitstanks entsprechend dem verbesserten Design umgekehrt angebracht und geformt sind
Motocyclette qui dispose au moins de deux réservoirs de liquide, disposés de manière réciproque et formés en fonction d'un agencement amélioré

(43) Date of publication of application: 04.08.2010
(73) Proprietor: YAMAHA MOTOR EUROPE N.V., 1119 NC Schiphol-Rijk (NL)
(72) Inventor: Suzuki, Masahiro, 20146 Milano (IT); Tisci, Riccardo, Pogliano, M.se (MI) 20046 (IT); Molteni, Hermann, Biassono (MI), 20046 (IT)
(74) Representative: Grünecker, Kinkeldey, Stockmair & Schwanhäusser Anwaltssozietät

(56) References cited:
- EP-A- 0 726 195
- EP-A- 1 243 500
- JP-A- 3 065 485
- JP-A- 8 011 763
- JP-A- 11 059 538
- JP-A- 11 227 657
- JP-A- 2000 229 593
- JP-A- 2002 205 676
- JP-A- 2004 066 937
- JP-A- 2004 098 860
- JP-B- 6 062 100
- US-A- 5 044 646

## Description

The present invention relates to the field of motorcycles. In particular, the present invention relates to the way component parts of said motorcycle are located, shaped and/or reciprocally disposed. In more detail, the present invention relates to the location and/or shape and/or reciprocal disposition of at least two tanks for two corresponding liquids. Still in more detail, the present invention relates to the location and/or shape and/or reciprocal disposition of at least the fuel tank and a second reservoir or tank for a corresponding second liquid such as, for instance, coolant water or the like.

As it is well known in the automotive field, motorcycles equipped with an engine cooled by a coolant liquid comprise, in addition to a reservoir or tank for storing fuel, also a second reservoir or tank for storing said coolant liquid. This in particular applies to usual motorcycles with liquid-cooled engine, such as, for instance, two-wheeled motorbikes and/or other 3 or four wheeled motorcycled such as choppers, quads or the like. The fuel tank comprises a fuel tank main body with a fuel tank filler or tube extending therefrom, and a fuel tank port formed on an end portion of said fuel filler tube or tube (the end portion opposite to the end portion connected to said fuel tank main body); moreover, a fuel filler cap is provided for closing and opening said fuel filler or tube (the fuel port formed on it). The same applies to the reservoir or tank for storing coolant liquid. Accordingly, said coolant liquid reservoir comprises a main body with a coolant filler extending therefrom, a coolant port being provided on said coolant liquid filler or tube, along with a cap for closing and opening said coolant liquid port of said coolant liquid filler. It arises therefrom immediately from the above that a convenient layout has to be found for disposing and reciprocally locating said fuel tank (with the fuel filler extending therefrom) and said coolant liquid reservoir (with the coolant liquid filler extending therefrom). However, experience has revealed that finding a convenient location for both the fuel tank and the coolant liquid reservoir represents quite a difficult task; in particular, this is due to the fact that the location of said fuel tank and said coolant liquid reservoir influences the overall dimension and layout of the motorcycle. A fuel tank located in a position such that said fuel tank can be viewed (for instance a fuel tank not covered by the cover assembly of the motorcycle) may not have any shape or appearance but needs to have a shape and an appearance matching with the overall shape and appearance of the motorcycle. The fuel tank may also not have any dimension or capacity; if, on the one hand, fuel tanks with big capacity may be convenient for several reasons, on the other hand, big fuel tanks may not be used for several motorcycles, for instance for motorcycles wherein the fuel tank has to be located inside the space defined by the main frame of the motorcycle. The same considerations as stated above also apply to other tanks or reservoirs, such as, for instance, the reservoir or tank for storing coolant liquid. Also in this case, the dimension, shape and location of said reservoir needs to match with the overall dimension, appearance and look of the motorcycle. A further aspect to be taken into consideration during the design of a motorcycle relates to the location of the fuel cap and/or the cap for opening and closing said coolant liquid reservoir. Usually, efforts are made to find a location for the fuel cap allowing for the simplification of the refueling operation, otherwise the driver could become irritated or the time needed for refueling could even unduly increase. This also applies to the reservoir for storing the coolant liquid since, during the life of a motorcycle, coolant liquid has to be added for compensating the coolant liquid lost due to leakages or the like. However, the position of the fuel cap and/or the cap of the coolant liquid reservoir depends on the location of the fuel tank body and/or the coolant liquid reservoir, respectively. In fact, as stated above, the fuel cap is for closing and opening of the fuel filler or tube extending from the fuel tank main body; according, if the fuel tank main body is located far away from the fuel cap a corresponding long fuel filler tube is needed. Finding a convenient location and shape for a long fuel filler may become difficult or troublesome. Moreover, in the case of a long fuel filler or tube, fixation means have to be provided for fixing said fuel filler, for instance to the main frame or other component parts of the motorcycle, so as to improve the stability and resistance of said fuel filler, thus avoiding damages due for instance to vibrations or the like. Again, finding a convenient location, in particular finding enough space for said fixation means may also become troublesome or difficult. Moreover, in the case of a long fuel filler, the time for refueling could unduly increase since air inside said fuel filler could represent an obstacle for the fuel, resulting in a reduced flow of fuel flowing through said fuel filler. In the case of the reservoir for coolant liquid the same considerations apply; in fact, also in this case, a long filler connecting the cap and the coolant liquid reservoir may represent a non applicable solution due to the disadvantages and inconveniences cited above.

In an attempt to meet as many as possible of the criteria and/or requirements outlined above, several solutions have been proposed in recent years by the manufacturers of motorcycles. In particular, according to a known solution, it has been proposed locating the fuel cap (for opening and closing the filler extending from the fuel tank main body) and the filler cap (for closing and opening the filler extending from the coolant liquid reservoir main body) close to each other. In particular, according to this solution, the fuel filler cap is located on the side of the filler cap for the reservoir and both said caps are located below a lid of the main cover assembly of the motorcycle. This solution offers the advantage that, when said lid is open for the exploiting the refueling operation, access to both the caps is obtained; accordingly, the driver (or the one exploiting the refueling operating) can also check the level of coolant liquid and eventually add coolant liquid if the need arises (if the level is too low). However, this solution is not free from disadvantages either; on the contrary several problems arise. For instance, since both caps are exposed by opening the lid, the risk arises that fuel may be spilled onto the filler cap so that said filler cap can become soiled. On the other hand, when coolant liquid is added, said coolant liquid could drop onto said fuel cap or even into the fuel filler (and therefore into the fuel tank) in the case in which the fuel cap has been removed and not yet screwed again on said fuel filler. Another problem relates to the fact that the cap of the coolant liquid reservoir could become damaged by the fuel flitting nozzle during refueling. Therefore, it results from the above that in spite of all the efforts made, the solutions proposed in the past and known in the prior art do not always meet all the essential requirements which have to be taken into consideration during the design of a motorcycle. In particular, the proposed solutions do not meet the need according to which at least the fuel tank and the coolant liquid tank have to be reciprocally disposed according to a layout offering a good performance in terms of simplified, quick and reliable refueling operations as well as in terms of the overall look, appearance and contained dimensions of the motorcycle. In particular, the prior art solutions do not meet the need of proposing an adequate shape for both the fuel tank and the coolant liquid tank allowing said fuel tank and said coolant liquid tank to be conveniently located and positioned. Finally, the solutions proposed in the past do not meet the need of proposing an improved layout for both the fuel cap and the cap of said coolant liquid reservoir rendering said two caps easily accessible but avoiding at the same time that one or both of said two caps get soiled or damaged during refueling or when coolant liquid is added.

A further example of background art on which the preamble of claim 1 is based is known from document JP11059538A.

Accordingly, in view of the above, it is an object of the present invention to provide a motorcycle with an improved layout according to which at least two tanks for corresponding two liquids are conveniently located. In particular, it is an object of the present invention to propose an improved layout according to which at least the fuel tank and the coolant liquid tank are conveniently located and reciprocally disposed. In more detail, a further object of the present invention is that of suggesting a motorcycle with an improved layout according to which at least the cap of the fuel tank and the cap of the coolant liquid reservoir are conveniently located so as to be easily accessible. A further object of the present invention is that of suggesting an improved layout according to which no risk arises that during the refueling operation either fuel is spilt or dropped on said cap of said coolant liquid reservoir, and without any risk that coolant liquid may drop on said fuel tank or even in the fuel filler extending from the fuel tank main body. The layout according to the present invention shall also allow for the containment of the overall dimension of the motorcycle and even for the improvement of its overall look and appearance. Moreover, both the fuel cap and the cap of the coolant liquid reservoir shall be adequately protected. Moreover, according to the layout of the present invention, a solution shall be offered according to which said fuel cap and said cap of the coolant liquid reservoir are conveniently integrated in the motorcycle so that the assembly operation of the motorcycle is simplified and speeded up, resulting in contained and/or reduced assembly costs.

In general terms, the present invention is based on the consideration that the problems affecting the prior art layouts relating to the fuel tank, the reservoir for coolant liquid as well as the fuel cap and the cap of said coolant liquid reservoir may be overcome or at least strongly reduced by adequately locating said fuel cap and said cap of the coolant liquid reservoir. In particular, the problems affecting prior art layouts may be overcome or at least strongly reduced by locating the fuel cap and the reservoir cap close to each other and by providing means allowing for the alternative hiding and exposure of said fuel cap and said reservoir cap; in particular, said means shall allow for the hiding of said reservoir cap when said fuel tank is exposed and for the exposure of said reservoir tank when said fuel tank is hidden. Since the fuel cap and the reservoir cap are located close to each other, said fuel cap and said reservoir cap are easily accessible so that, for instance, the coolant liquid level can be checked during refueling. Moreover, since protecting means are provided allowing for the alternative hiding and exposure of said fuel cap and said reservoir cap, no risk arises that one of said caps become soiled (for instance the fuel cap due to dropping coolant liquid or the reservoir cap due to dropping fuel) or damaged (for instance the reservoir cap getting damaged by the fuel filling nozzle). A further consideration upon which the present invention is based relates to the fact that said covering/exposing or hiding/exposing means may be provided so as to be part of a receiving member inside of which at least said fuel cap is provided. In fact, in this case, said means can be easily and quickly operated. Moreover, still according to the present invention, operating said means can be further simplified if said receiving member is made of rubber material; in this case, said means can be simply pulled or bent so as to alternatively hide and expose said caps. With the fuel cap and the reservoir cap being located close to each other, a convenient position for both the fuel tank main body and the coolant liquid reservoir may be found. Moreover, still according to the present invention, further advantages arise when said fuel cap and the reservoir tank are disposed in the front-bank direction of the motorcycles, for instance with said reservoir cap facing toward the front and said fuel cap facing toward the rear of the motorcycle. Still further advantages arise, according to the present invention, when said receiving member is provided with an opening or aperture, and a lid is provided, belonging to the main cover of the motorcycle, allowing for the opening and closing of said aperture of said receiving member; in this case, evident advantages arise in terms or improved overall appearance of the motorcycle.

On the basis of the considerations as stated above, the above mentioned problems posed are overcome by the features stated in independent claim 1.

Further embodiments and/or features of the present invention are laid down in the dependent claims. Further advantages, objectives, features as well as further embodiments of the present invention will become more apparent with the following detailed description when taken with reference to the accompanying drawings, in which identical or corresponding parts are identified by the same reference numerals.

In particular, in the drawings:
FIG. 1 relates to a left side view of a motorcycle with a layout according to an embodiment of the present invention;
FIG. 2 relates to a cross-sectional side view of the layout according to which a fuel filler cap and a water filler cap of the motorcycle are disposed;
FIG. 3 relates to a cross-sectional back view (cross-sectional view taken along a line III-III in FIGS. 1 and 2) of the layout of Figure 2;
FIG. 4 relates to a perspective view of the layout according to the present invention as viewed from the left rear side of the motorcycle;
FIG. 5 relates to a further perspective view of the layout according to the present invention as viewed from the left rear side of the motorcycle.

While the present invention is described with reference to the embodiments as illustrated in the following detailed description as well as in the drawings, it should be understood that the following detailed description as well as the drawings are not intended to limit the scope of the present invention to the particular illustrated embodiments disclosed and/or depicted therein, but rather that the described illustrated embodiments merely exemplify the various aspects of the present invention, the scope of which is defined by the appended claims.

The present invention is understood to be of particular advantage when applied to two wheeled motorcycles, such as, for instance, motorbikes. For this reason, examples will be given in the following, in which corresponding embodiments of the exhaust gas purifying apparatus according to the present invention are applied to motorcycles. However, it has to be noted that the applications of the exhaust gas purifying apparatus according to the present invention are not limited to the case of motorbikes; on the contrary, the exhaust gas purifying apparatus according to the present invention may also be applied to other motorcycles, in particular, to three or even four wheeled motorcycles such as, for instance, choppers, quads or the like.

In the following, details and features of the present invention will be described with reference to the drawings wherein corresponding or equivalent features are identified by corresponding reference numerals. Moreover, in both the drawings and the following disclosure, terms such as, for instance, front, rear, left and right have to be understood as meaning respectively front, rear, left and right as used from the perspective of the person sitting on the motorcycle implementing the present invention. Moreover, in the following description, two identical reference numerals are used for identifying "left and right" component parts, even if only one of said two components parts is depicted in the drawings; for instance, if the description refers to a right and a left cover, with only the left cover being depicted in the drawings, said left and right covers are identified by indicating the same reference numerals twice; in the same way, when the description refers to a component part identified by two identical reference numerals (for instance 19, 19), the description has to be understood as meaning that a left and a right component part are provided.

In the drawings, reference numeral 1 relates to a motorcycle with an improved layout according to the present invention; in particular, in the drawings there is depicted a so called maxi scooter. However, it appears clearly from the following disclosure that the applications of the present invention are not limited to the case of maxi scooters but comprise any kind of motorcycles.

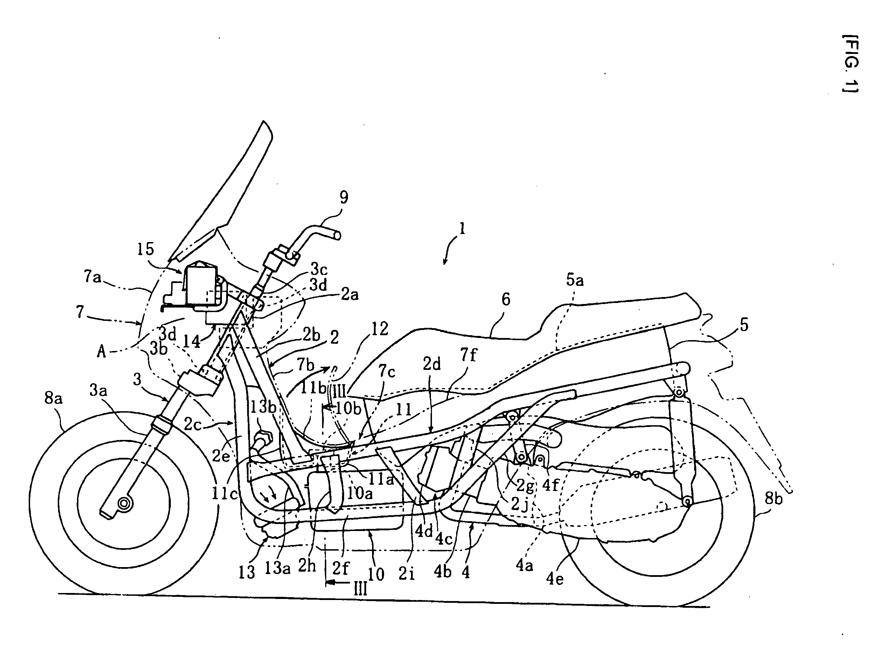

As apparent in particular from Figure 1, the motorcycle 1 comprises a body frame 2, (in the following also referred to as main frame) a front fork 3 supported by a head pipe 2a at a front end of the body frame 2, an engine unit 4 supported by a substantially central portion of the body frame 2, a housing box 5 (for instance for housing luggage or the like) located above the engine unit 4, a seat 6 disposed on said box 5 and pivotally mounted so as to allow to open and close an opening 5a of said housing box 5. The motorcycle 1 is covered or protected by a vehicle body cover 7 substantially surrounding the motorcycle 1.

The body frame 2 comprises left and right main tubes 2b, 2b connected to an upper portion of the head pipe 2a and extending therefrom, left and right down tubes 2c, 2c connected to a lower portion of the head pipe 2a and extending therefrom, along with left and right upper tubes (first and second frame members) 2d, 2d extending in a vehicle front-back direction.

Each of the down tubes 2c comprises a substantially vertical tube portion 2e extending downward from the head pipe 2a, a lateral tube portion 2f extending rearward from a lower end portion of the vertical tube portion 2e, and an inclined tube portion 2g extending rearward and diagonally upward from the lateral tube portion 2f. Front end portions of the upper tubes 2d, 2d are connected to lower portions of the vertical tube portions 2e, 2e, whilst rear end portions of the inclined tube portions 2g, 2g are connected to rear portions of the upper tubes 2d, 2d. The upper tube 2d, the lateral tube portion 2f, and the inclined tube portion 2g are connected by a plurality of connecting members 2h, 2i, and 2j, which confer high rigidity to the body frame 2.

The front fork 3 comprises left and right fork bodies 3a, 3a, a bracket 3b for coupling upper end portions of both the fork bodies 3a, 3a, and a steering shaft 3c standing on the bracket 3b and extending upward therefrom.

A front wheel 8a is pivoted on lower end portions of the left and right fork bodies 3a, 3a. The steering shaft 3c is received inside the head pipe 2a so as to be supported by the head pipe 2a in a way allowing said steering shaft to be steered leftward and rightward; in particular, to this end, a bearing 3d is provided (interposed between said steering shaft 3c and said head pipe 2a). A steering handlebar 9 is fixed to an upper end portion of the steering shaft 3c.

In the engine unit 4, a cylinder block 4b, a cylinder head 4c, and a head cover 4d are coupled to a front wall of a crankcase 4a; the arrangement of Figure 1, the cylinder axes is oriented substantially horizontally. A transmission case 4e extending rearward is coupled to a left side of the crankcase 4a. An upper wall of the crankcase 4a is fixed to the upper tubes 2d by means of link members 4f supporting said crankcase 4a. A rear wheel 8b is rotatably supported by a rear end portion of the transmission case 4e; driving force is therefore transmitted from the crankcase 4a to the rear wheel 18 by means of the transmission case 4e.

A vehicle body cover 7 is further provided, with said body cover 7 surrounding the motorcycle 1; in particular, said vehicle body cover 7 (n the following also referred to as motorcycle body cover or simply as body cover) comprises a front cover 7a covering the head pipe 2a (and/or component parts or portions fixed to or supported by said head pipe 2a) from a front side, a leg shield 7b for covering the head pipe 2a (and/or component parts or portions fixed to or supported by said head pipe 2a) from behind; moreover, a center cover 7c covers the left and right upper tubes 2d, 2d and lateral tube portions 2f, 2f (and/or component parts or portions fixed to or supported by said tubes), whilst a rear cover 7f covers a lower portion of the seat 6 and lateral sides of the housing box 5.

According to the needs and/or circumstances, the rear cover 7f, the housing box 5, and the seat 6 can be fixed to each other so as to form a unique, unitized piece which can be mounted on and detached from the upper tubes 2d during a single, unique operation.

The center cover 7c comprises left and right footboard portions 7h offering support for the left and right foot of a driver, respectively; said footboard portions extend in particular, as apparent from Figure 1, in the front-back direction and are disposed above the lateral tube portions 2f, 2f, respectively. A ridge portion 7g cover the upper tubes 2d, 2d, with said ridge portion 7g connecting the left and right footboard portions 7h, 7h.

As stated above, the head pipe 2a is surrounded by the front cover 7a and the leg shield 7b in combination, and an ABS unit 14 and a battery 15 are disposed in a space A surrounded by the front cover 7a and the leg shield 7b. The ABS unit 14 is disposed to the right of the head pipe 2a, whilst the battery 15 is disposed in front of the head pipe 2a.

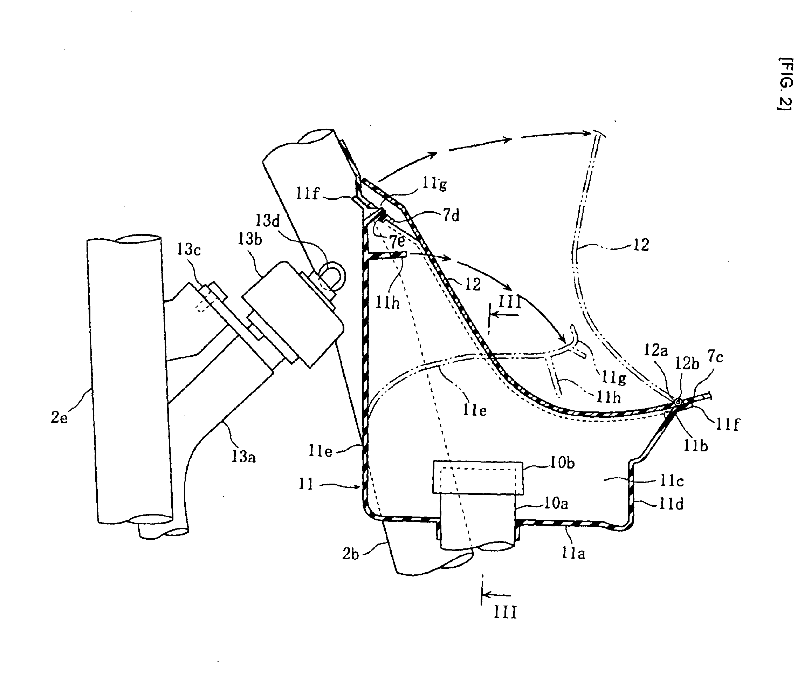

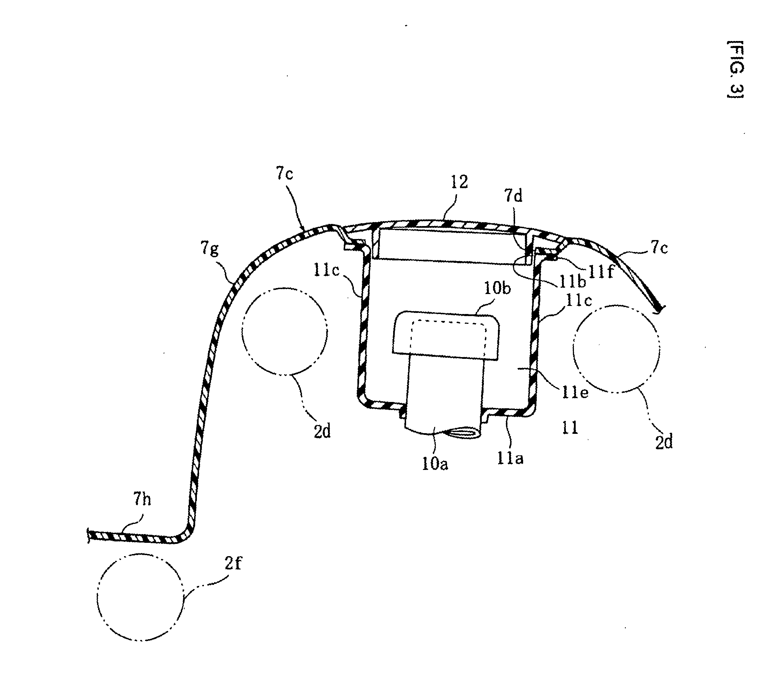

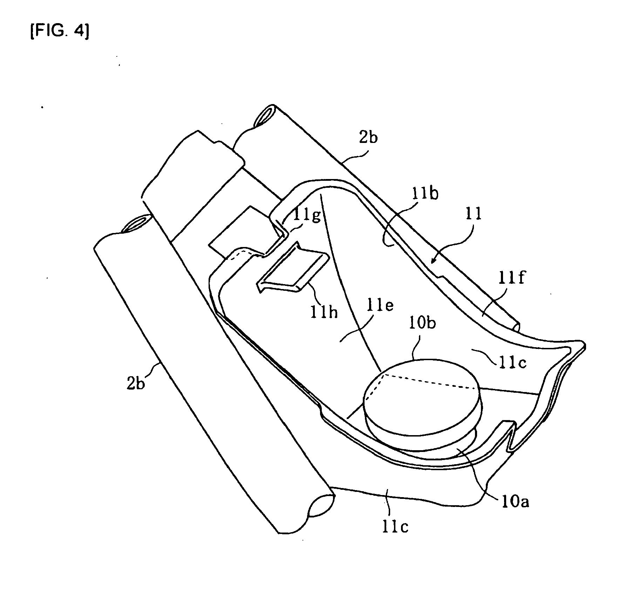

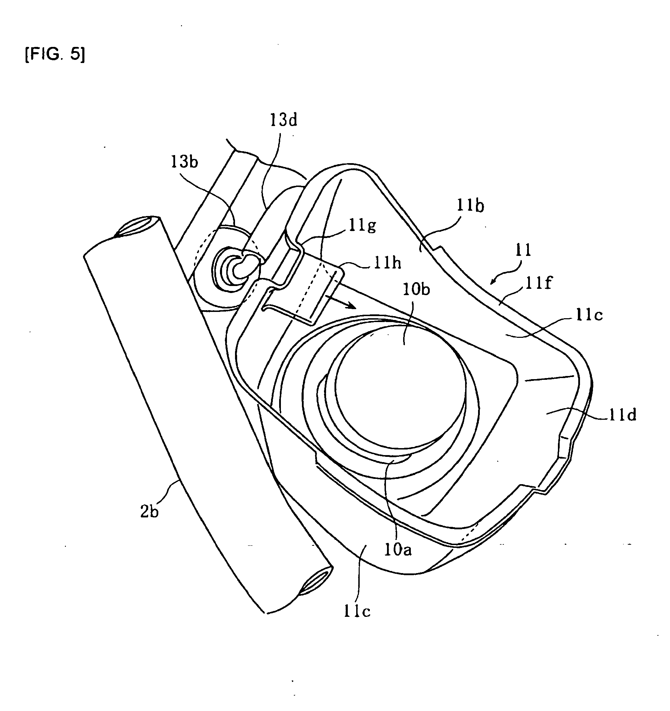

In the following, further details and/or features of the layout according to the present invention will be described with reference to Figures 1 to 5; in Figures 1 to 5, those features already explained above with reference to Figure 1 are identified by the same reference numerals.

As apparent from Figures 1 to 3, a fuel tank 10 is installed in a space covered by the center cover 7c and defined, in the width direction of the motorcycle 1 (i.e. in a direction perpendicular to the plane of Figure 1), by the left and right upper tubes 2d, 2d and the left and right lateral tube portions 2f, 2f. A fuel filler tube or hose 10a is connected to an upper wall of the fuel tank main body 10 so as to extend from said upper wall in an upward direction or orientation. The fuel filler tube 10a extends in particular through a bottom wall 11 a of a fuel receiving pan (in the following also referred to as fuel receiving member) 11 and protrudes upward; a fuel filler cap 10b is detachably attached to an upper end portion of the fuel filler tube 10a, thus allowing to open and to close, alternatively, said end portion (end port) of said fuel filler tube 10a. The fuel filler cap 10b is therefore received inside said fuel receiving cap 11.

The fuel receiving pan 11 is provided for several purposes. For instance, said fuel receiving pan 11 allows to collect spilt fuel or fuel dropping from the fuel filling nozzle during refueling; moreover, said fuel receiving pan 11, (a lateral wall thereof), allows to alternatively expose and hide the fuel filler cap 10b as it will become more apparent from the following disclosure. Moreover, and still as it will be explained in detail below, said fuel receiving pan 11 allows to alternatively hide and expose a further filler cap of a further reservoir (for instance the cap of the coolant liquid reservoir or tank). Furthermore, said fuel receiving pan 11 is realized so as to allow to hide said second cap whilst exposing, at the same time, said fuel filler cap 10b. as well as to expose said second cap whilst hiding at the same time said fuel filler cap 10b.

Said fuel receiving pan 11 is in a box shape and comprises an opening 11 b at its upper end. According to the needs and/or circumstances, the fuel receiving pan 11 may made of an elastic material such as rubber or the like; advantages offered by a fuel receiving pan of an elastic material will be explained in the following. However, independently thereon which material is used, said pan 11 comprises left and right side walls 11c, 11c. a rear wall 11 d, and a front wall 11 e, with said left, right, front and rear walls extending substantially upward from an edge of said bottom wall 11a. In the embodiment depicted in the drawings, the front wall 11 e of the fuel receiving pan 11 is interposed between the fuel filler cap 10b and a further cap 13b (to be described in more details in the following).

A flange portion 11f is formed by bending the edge of the opening 11 b of the fuel receiving pan 11 outward. Moreover, said fuel receiving pan is located below the center cover 7c (below the ridge portion 7g thereof), with said opening 11 b being located in correspondence of a cover opening 7d formed in said center cover 7c (in the ridge portion 7g thereof); accordingly, the fuel receiving pan 11 can be fixed to said center cover 7c by pressing said flange portion 11f against a peripheral edge of said cover opening 7d formed in the ridge portion 7g of the center cover 7c. Since said center cover 7c is fixed to the main frames 2b and the upper tubes 2d, also the fuel receiving pan 11 results to be firmly fixed to the frame of the motorcycle 1. The opening 11 b of the fuel receiving pan 11 and the cover opening 7d of the ridge portion 7g can be opened and closed by a lid 12. To this end, a rear end portion 12a of the lid 12 is pivotally supported by a rear edge portion of the cover opening 7d; for instance, to this end, a hinge pin 12b can be provided. However, according to the present invention and depending on the needs and/or circumstances, other pivoting means can be provided along those known to the skilled person. By pivoting the lid 12 rearward so as to open the cover opening 7d access to the inside of the fuel receiving pan 11, in particular to the fuel filler cap 10b can be gained, so that refueling can be carried out.

Locking means such as for instance a locking chip 11 g are formed by partially bending a portion of an upper edge of the front wall 11 e of the fuel receiving pan 11 so that the bent portion of the upper edge protrudes rearward. The locking chip 11g is adapted to interact or cooperate with a corresponding locking note (locked or locking portion) 7e formed at a front edge of the cover opening 7d. In particular, said locking chip is adapted to be alternatively inserted into and removed from said locking hole 7e so as to alternatively lock and unlock the front wall 11 e of the fuel receiving pan 11; by removing the locking chip 11 g from the locking hole 7e so as to unlock the front wall 11 e of the fuel receiving pan 11, and by displacing or pivoting said rear wall 11e rearward, access to the cap 13b can be gained. To this end, the front wall 11e comprises a pulling chip 11 h integrally formed with said rear wall 11e and extending rearward from said front wall 11e.

In particular, in the case of a fuel receiving pan 11 of elastic material, by detaching the locking chip 11 g from the locking hole 7e, grasping the grasped chip 11h, and pulling it rearward, it is possible to simply tilt the front wall 11e rearward.

In front of the fuel tank 10, a radiator 13 is disposed between upward bend portions of the left and right lateral tube portions 2f, 2f. A water filler hose 13a connected to a head tank portion of the radiator 13 extends upward with the upper end portion of said water filler hose being fixed to the vertical tube portion 2e of the down tube 2c by a bracket 13c. To the upper end portion of the water filler hose 13a, a water filler cap 13b is detachably mounted. The water filler cap 13b is disposed below a lower end portion of the leg shield 7b.

A first end of a reservoir hose 13d is connected to the water filler cap 13b; the other end (opposite to said first end) of the reservoir hose 13d is connected to a reservoir tank (not shown in the drawings) disposed on the right of the fuel tank 10.

The reservoir tank is for receiving and storing coolant water exiting from the radiator 13 so as to compensate an increase in volume of coolant water in the radiator 13 due to expansion caused by a rise in temperature of said coolant water; at the same time, said reservoir tank allows coolant water to be supplied to said radiator 13 so as to compensate a decrease in volume of the coolant water in said radiator 13 due to contraction caused by fall in temperature. The water filler cap 13b is adapted to be detached or removed to replenish the radiator 13 with coolant water. As apparent from the drawings, the water filler cap 13b is positioned in front of and in close proximity to the front wall 11 e of the fuel receiving pan 11. In particular, said front wall 11e is interposed between said water filler cap 13b and said fuel filler cap 10b. Moreover, the fuel filler cap 10b and the water filler cap 13b are disposed between the left and right upper tubes (first and second frame members) 2d, 2d, between the left and right lateral tube portions 2f, 2f, with the water filler cap 13b facing toward the front of the motorcycle, whilst the fuel filler cap 10b faces toward the rear of the motorcycle; in other words, the water filler cap 13b is located in a space in front of said fuel filler cap 10b in the vehicle front-back direction or even when viewed from the side of said motorcycle. The front wall 11 e functions as a cap cover for covering the water filler cap 13b or the like, in particular during refueling.

In fact, refueling is carried out by opening the lid 12, detaching the fuel filler cap 10b, and inserting the fuel filling nozzle into the fuel filler cap 10a. In this case, due to the layout according to the present invention as disclosed above, the water filler cap 13b is covered and/or hidden and/or protected by the front wall 11 e of the fuel receiving pan 11 so that fuel cannot be spilt onto the water filler cap 13b; neither can the fuel filling nozzle hit the water filler cap 13b so as to damage it.

On the other hand, when the radiator 13 needs to be supplied with water, the water filler can 13b needs to be exposed so as to be accessible; to this end, the locking chip 11 g at the upper end of the front wall 11 e is detached from the locking hole 7e, the grasped chip 11 h is held and pulled rearward, and the front wall 11 e is tilted rearward (or simply displaced rearward in the case of a fuel receiving pan 11 or of a front wall 11e thereof not made of an elastic material such as rubber or the like). As a result, whilst the water filler cap becomes exposed and accessible, the fuel filler cap 10b is hidden and/or covered and/or protected by the front wall 11e from above and the water filler cap 13b is exposed outside. By detaching the water filler cap 13b, water supply becomes possible. However, since as described above, the fuel filler cap 10b is covered with the front wall 11e, water is not spilt on the fuel filler cap 10b.

As described above, according to the layout of the present invention, the water filler cap 13b is hidden in a space in front of the front wall 11e of the fuel receiving pan 11 during normal refueling operation, i.e. when the lid 12 is open. Therefore, there is no fear of soiling the water filler cap 13b with fuel nor of damaging the water filler cap 13b with the fuel filling nozzle.

On the other hand, to supply water to the radiator 13, it is possible to expose the water filler cap 13b outside by tilting the front wall 11e rearward. Therefore, the water filler cap 13b is easy accessible and operability and reliability in supplying water to the radiator 13 is secured or at least improved.

Moreover, since according to the layout of the present invention, the front wall 11 e of the fuel receiving pan 11 that also carries out the function of protecting the fuel filler cap 10b, it arises that the layout according to the present invention also allows to avoid that the number of parts unduly increase, with evident advantages in terms of reduced or contained costs.

Furthermore, when the front wall 11 e is tilted or displaced rearward so as to expose the water filler cap 13b, the front wall 11e covers the fuel filler cap 10b. Therefore, when the water filler cap 13b is opened and water supply operation is carried out, spill of water on the fuel filler cap 10b is avoided.

Moreover, because the fuel filler cap 10b and the water filler cap 13b are disposed on the rear side and the front side in the vehicle front-back direction (beyond and in front of the front wall 11 e of the fuel receiving pan 11, respectively, when viewed from the side), and since said fuel filler cap 10b and said water filler cap 13b are positioned between left and right main frames 2b, 2b and upper tubes 2d, 2d extending in the vehicle front-back direction as viewed from above the vehicle, it is easy to find enough space for disposing them. To the contrary, if the fuel filler cap and the water filler cap were disposed in the vehicle left-right direction (for instance one on the side of the other), it could become difficult to secure and find space for disposing them due to interference with the frame (with the frame tubes or portions).

Still according to an embodiment of the present invention, the water filler cap 13b is disposed below the lower end portion of the leg shield 7b. Therefore, empty space below the lower end portion of the leg shield can be utilized, thus rendering it easy to secure the space for disposing the water filler cap 13b.

The opening 11 b of the fuel receiving pan 11 is positioned in the ridge portion 7g of the center cover 7c, with said ridge portion 7g comprising the cover opening 7d, so that and the cover opening 7d and the opening 11 b of the fuel receiving pan 11 are opened and closed simultaneously by means of the lid 12. Therefore, the fuel filler cap 10b results to be located in a relatively high position and refueling operation are simplified.

The front wall 11 e is formed with the locking chip 11 g and the locking chip 11 g can be engaged with and detached from the locking hole 7e formed at the front edge of the cover opening 7d. Therefore, the front wall 11e can reliably stand by itself and reliably cover the water filler cap 13b.

Moreover, the fuel receiving pan 11 is fixed to the body frame by pressing together the flange portion 11f of the fuel receiving pan 11 and the edge portion of the cover opening 7d of the ridge portion 7g; accordingly, it is possible to reliably mount the fuel receiving pan 11 on the body frame with a simple structure.

It arises therefore from the above disclosure that the present invention allows for overcoming or at least for strongly reducing the problems affecting the prior art layouts. In particular, with the present invention, evident advantages in terms of improved functionality and reliability of the refueling operation as well as when coolant has to be added to the radiator and/or the coolant reservoir or tank. Moreover, evident advantages are obtained in terms of contained dimensions and improved overall look and appearance of the motorcycle are obtained.

While the present invention has been described with reference to the particular embodiments depicted in the drawings, it has to be understood that the present invention is not limited to the particular embodiments described. For instance, while a motorcycle has been described wherein the fuel tank and the coolant reservoir (and/or the fuel filler cap and the coolant filler cap) are disposed according to the layout of the present invention, it has to be noted that the present invention also comprises the embodiment according to which other tanks are disposed, located and shaped according to the inventive layout. For example, the invention can be also applied to a two-cycle oil tank, a coolant water recovery tank of the radiator, a reservoir tank of a master cylinder, and the like.

Moreover, the reciprocal disposition of the coolant filler cap and the fuel filler can be changed according to the needs and/or circumstances without departing from the scope of the present invention; for instance, the fuel filler cap and the coolant filler cap can be disposed in front of and beyond the front wall of the fuel receiving pan, respectively, when viewed from the side of the motorcycle. In this case, it is the coolant filler cap that can be received inside said fuel receiving pan. Moreover, and still according to the present invention, a wall of the fuel receiving pan other than the front wall (for instance the rear wall) can be interposed between the two caps, for instance between the coolant filler cap and the fuel filler cap.

The scope of the present invention is therefore defined by the appended claims.

## Claims

1. A motorcycle (1) comprising:
a body frame (2);
a first liquid tank (10) and a second liquid tank supported by said body frame (2); a first cap (10b) by means of which a supply port of said first liquid tank (10) can be open and closed; and a second cap (13b) by means of which a supply port of said second liquid tank can be open and closed; said motorcycle comprising cap cover (11e) interposed between said first cap (10b) and said second cap (13b),
**characterized in that** said cap cover (11e) is adapted to be displaced so as to alternatively hide and expose said first cap (10b) and said second cap (13b), said second cap (13b) being hidden by said cap cover (11e) when said first cap (10b) is exposed so as to be no longer hidden by said cap cover (11e), said second cap (13b) being exposed so as to be no longer hidden by said cap cover (11e) when said cap cover (11e) is displaced so as to hide said first cap (10b).

2. A motorcycle as claimed in claim 1, **characterized in that** said motorcycle further comprises a receiving member (11) with at least a wall extending substantially in the bottom-top direction of said motorcycle, **in that** said at least one wall is interposed between said first cap (10b) and said second cap (13b), and **in that** said cap cover (11e) belongs to said at least one wall interposed between said first cap (10b) and said second cap (13b).

3. A motorcycle as claimed in claim 2, **characterized in that** said first cap (10b) and said second cap (13b) are disposed in a front-back direction with said first cap (10b) facing toward the back of said motorcycle and said second cap (13b) facing toward the front of said motorcycle when viewed from a side of said motorcycle, and **in that** a front wall of said receiving member is interposed between said first cap (10b) and said second cap (13b), with said cap cover (11e) belonging to said front wall.

4. A motorcycle as claimed in claim 3, **characterized in that**, said first cap (10b) and said second cap (13b) are disposed between first and second members (2d) of said body frame (2) extending in the vehicle front-back direction as viewed from above said motorcycle.

5. A motorcycle as claimed in one of claims 2 to 4, **characterized in that**, said receiving member (11) further comprises a bottom wall (11a), and **in that** said supply port of said first liquid tank (10) is received inside said receiving member (11) and belongs to a supply tube (10a) extending from said liquid tank (10) through said bottom wall (11a).

6. A motorcycle as claimed in one of claims 1 to 5, **characterized in that**, said motorcycle further comprises a body cover (7) covering said first liquid tank (10) and said second liquid tank, and **in that** said body cover comprises a cover aperture (7d) through which access to said first cap (10b) can be gained.

7. A motorcycle as claimed in claim 6, **characterized in that** said body cover (7) comprises a lid (12) for opening and closing said aperture (7d) formed on said body cover (7).

8. A motorcycle as claimed in one of claims 6 and 7, **characterized in that**, said body cover comprises left and right footboard portions (7h) extending in a front-back direction of said motorcycle, along with a ridge portion (7g) coupling said left and right footboard portions (7h), and **in that** said cover aperture (7d) is formed in said ridge portion (7g).

9. A motorcycle as claimed in one of claims 6 to 8, **characterized in that**, said body cover (7) further comprises a leg shield portion (7b) covering a head pipe (2a) of said body frame (2) from behind, and **in that** said second cap (10b) is disposed below a lower end portion of said leg shield portion (7b).

10. A motorcycle as claimed in claim 9, **characterized in that**
said cap cover (11e) comprises a locking portion (11) that can be locked to and detached from a locking portion (7e) formed in said leg shield portion (7b) of said body cover (7).

11. A motorcycle as claimed in one of claims 6 to 10, **characterized in that**, said receiving member (11) is fixed to said body cover (7), and **in that** said body cover (7) is fixed to said body frame (2).

12. A motorcycle as claimed in one of claims 1 to 11, **characterized in that**, said first liquid stank (10)is a fuel tank, and **in that** said first cap (10b) is a fuel supply cap for opening and closing a fuel supply port of said fuel tank.

## Patentansprüche

1. Motorrad (1), das umfasst:
einen Karosserierahmen (2);
einen ersten Flüssigkeitsbehälter (10) und einen zweiten Flüssigkeitsbehälter, die von dem Karosserierahmen (2) getragen werden; eine erste Kappe (10b), mit der eine Zuführöffnung des ersten Flüssigkeitstanks (10) geöffnet und geschlossen werden kann, und eine zweite Kappe (13b), mit der eine Zuführöffnung des zweiten Flüssigkeitstanks geöffnet und geschlossen werden kann, wobei das Motorrad eine Kappenabdeckung (11e) umfasst, die zwischen der ersten Kappe (10b) und der zweiten Kappe (13b) angeordnet ist, **dadurch gekennzeichnet, dass** die Kappenabdeckung (11 e) so eingerichtet ist, dass sie so verschoben wird, dass sie abwechselnd die erste Kappe (10b) und die zweite Kappe (13b) verdeckt und freilegt, wobei die zweite Kappe (13b) durch die Kappenabdeckung (11e) verdeckt wird, wenn die erste Kappe (10b) freigelegt ist, so dass sie nicht mehr durch die Kappenabdeckung (11e) verdeckt wird, und die zweite Kappe (13b) freigelegt wird, so dass sie nicht mehr durch die Kappenabdeckung (11e) verdeckt wird, wenn die Kappenabdeckung (11e) so verschoben wird, dass sie die erste Kappe (10b) verdeckt.

2. Motorrad nach Anspruch 1, **dadurch gekennzeichnet, dass** das Motorrad des Weiteren ein Aufnahmeelement (11) mit wenigstens einer Wand umfasst, die im Wesentlichen in der vertikalen Richtung des Motorrades verläuft, dadurch, dass die wenigstens eine Wand zwischen der ersten Kappe (10b) und der zweiten Kappe (13b) angeordnet ist und dass die Kappenabdeckung (11e) zu der wenigstens einen Wand gehört, die zwischen der ersten Kappe (10b) und der zweiten Kappe (13b) angeordnet ist.

3. Motorrad nach Anspruch 2, **dadurch gekennzeichnet, dass** die erste Kappe (10b) und die zweite Kappe (13b) in einer Längsrichtung angeordnet sind, wobei, von einer Seite des Motorrades aus gesehen, die erste Kappe (10b) der Rückseite des Motorrades zugewandt ist und die zweite Kappe (13b) der Vorderseite des Motorrades zugewandt ist, und dadurch**,** dass eine Vorderwand des Aufnahmeelementes zwischen der ersten Kappe (10b) und der zweiten Kappe (13b) angeordnet ist und die Kappenabdeckung (11 e) zu der Vorderwand gehört.

4. Motorrad nach Anspruch 3, **dadurch gekennzeichnet, dass** die erste Kappe (10b) und die zweite Kappe (13b) zwischen einem ersten und einem zweiten Element (2d) des Karosserierahmens (2) angeordnet sind, die sich, von oberhalb des Motorrades gesehen, in der Fahrzeug-Längsrichtung erstrecken.

5. Motorrad nach einem der Ansprüche 2 bis 4, **dadurch gekennzeichnet, dass** das Aufnahmeelement (11) des Weiteren eine untere Wand (11a) umfasst und dass die Zuführöffnung des ersten Flüssigkeitsbehälters (10) im Inneren des Aufnahmeelementes (11) aufgenommen ist und zu einer Zuführröhre (11a) gehört, die sich von dem Flüssigkeitsbehälter (10) durch die untere Wand (11a) hindurch erstreckt.

6. Motorrad nach einem der Ansprüche 1 bis 5, **dadurch gekennzeichnet, dass** das Motorrad des Weiteren eine Karosserieabdeckung (7) umfasst, die den ersten Flüssigkeitsbehälter (10) und den zweiten Flüssigkeitsbehälter abdeckt, und dass die Karosserieabdeckung eine Abdeckungsöffnung (7d) umfasst, über die die erste Kappe (10b) zugänglich ist.

7. Motorrad nach Anspruch 6, **dadurch gekennzeichnet, dass** die Karosserieabdeckung (7) einen Deckel (12) zum Öffnen und Schließen der Öffnung (7d) umfasst, die an der Karosserieabdeckung (7) ausgebildet ist.

8. Motorrad nach einem der Ansprüche 6 und 7, **dadurch gekennzeichnet, dass** die Karosserieabdeckung einen linken und einen rechten Trittbrettabschnitt (7h) umfasst, die sich in einer Längsrichtung des Motorrades zusammen mit einem Wulstabschnitt (7g) erstrecken, der den linken und den rechten Trittbrettabschnitt (7h) verbindet, und dadurch, dass die Öffnungsabdeckung (7d) in dem Wulstabschnitt (7g) ausgebildet ist.

9. Motorrad nach einem der Ansprüche 6 bis 8, **dadurch gekennzeichnet, dass** die Karosserieabdeckung (7) des Weiteren einen Beinschutzabschnitt (7b) umfasst, der einen Steuerkopf (2a) des Karosserierahmens (2) von hinten abdeckt, und dass die zweite Kappe (10b) unterhalb eines unteren Endabschnitts des Beinschutzabschnitts (7b) angeordnet ist.

10. Motorrad nach Anspruch 9, **dadurch gekennzeichnet, dass**
die Kappenabdeckung (11e) einen Arretierabschnitt (11) umfasst, der an einem Arretierabschnitt (7e), der in dem Beinschutzabschnitt (7b) der Karosserieabdeckung (7) ausgebildet ist, arretiert und von ihm gelöst werden kann.

11. Motorrad nach einem der Ansprüche 6 bis 10, **dadurch gekennzeichnet, dass** das Aufnahmeelement (11) an der Karosserieabdeckung (7) befestigt ist und dass die Karosserieabdeckung (7) an dem Karosserierahmen (2) befestigt ist.

12. Motorrad nach einem der Ansprüche 1 bis 11, **dadurch gekennzeichnet, dass** der erste Flüssigkeitsbehälter (10) ein Kraftstoffbehälter ist und dass die erste Kappe (10b) eine Kraftstoffzuführkappe zum Öffnen und Schließen einer Kraftstoffzuführöffnung des Kraftstoffbehälters ist.

## Revendications

1. Motocycle (1) comprenant:
un cadre (2);
un premier réservoir pour liquide (10) et un second réservoir pour liquide supportés par le cadre (2); un premier bouchon (10b) à l'aide duquel un orifice d'alimentation du premier réservoir pour liquide (10) peut être ouvert et fermé, et un second bouchon (13b) à l'aide duquel un orifice d'alimentation du second réservoir pour liquide peut être ouvert et fermé; le motocycle comprenant un recouvrement de bouchon (11e) qui est placé entre le premier bouchon (10b) et le second bouchon (13b),
**caractérisé en ce que** le recouvrement de bouchon (11e) est apte à être déplacé de manière à cacher et dégager en alternance le premier bouchon (10b) et le second bouchon (13b), le second bouchon (13b) étant caché par le recouvrement de bouchon (11e) quand le premier bouchon (10b) est dégagé de manière à ne plus être caché par ledit recouvrement (11e), et le second bouchon (13b) étant dégagé de manière à ne plus être caché par le recouvrement (11e) quand ce dernier est déplacé de manière à cacher le premier bouchon (10b).

2. Motocycle tel que revendiqué dans la revendication 1, **caractérisé en ce qu'**il comprend par ailleurs un élément de réception (11) avec au moins une paroi qui s'étend globalement de bas en haut par rapport au motocycle, **en ce que** la ou les parois sont placées entre le premier bouchon (10b) et le second bouchon (13b), et **en ce que** le recouvrement de bouchon (11e) fait partie de la paroi ou des parois placées entre le premier bouchon (10b) et le second bouchon (13b).

3. Motocycle tel que revendiqué dans la revendication 2, **caractérisé en ce que** le premier bouchon (10b) et le second bouchon (13b) sont disposés dans un sens avan-arrière, le premier bouchon (10b) étant dirigé vers l'arrière du motocycle, et le second bouchon (13b) vers l'avant du motocycle, si on regarde le motocycle de côté, et **en ce qu'**une paroi avant de l'élément de réception est placée entre le premier bouchon (10b) et le second bouchon (13b), le recouvrement de bouchon (11e) faisant partie de la paroi avant.

4. Motocycle tel que revendiqué dans la revendication 3, **caractérisé en ce que** le premier bouchon (10b) et le second bouchon (13b) sont disposés entre des premier et second éléments (2d) du cadre (2) qui s'étend dans le véhicule dans le sens avant-arrière, si on regarde le motocycle de dessus.

5. Motocycle tel que revendiqué dans l'une des revendications 2 à 4, **caractérisé en ce que** l'élément de réception (11) comprend par ailleurs une paroi inférieure (11a) et **en ce que** l'orifice d'alimentation du premier réservoir pour liquide (10) est logé à l'intérieur de l'élément de réception (11) et fait partie d'un tube d'alimentation (10a) qui part du réservoir pour liquide (10) et qui traverse la paroi inférieure (11a).

6. Motocycle tel que revendiqué dans l'une des revendications 1 à 5, **caractérisé en ce qu'**il comprend par ailleurs un carénage (7) qui couvre le premier réservoir pour liquide (10) et le second réservoir pour liquide, et **en ce que** le carénage comprend une ouverture de carénage (7d) par laquelle on peut accéder au premier bouchon (10b).

7. Motocycle tel que revendiqué dans la revendication 6, **caractérisé en ce que** le carénage (7) comprend un couvercle (12) pour ouvrir et fermer ladite ouverture (7d) formée sur le carénage (7).

8. Motocycle tel que revendiqué dans l'une des revendications 6 et 7, **caractérisé en ce que** le carénage comprend des parties droite et gauche formant marchepieds (7h) qui s'étendent dans un sens avant-arrière du motocycle, ainsi qu'une partie saillante (7g) qui relie les parties gauche et droite formant marchepieds (7h), et **en ce que** l'ouverture de carénage (7d) est formée dans ladite partie saillante (7g).

9. Motocycle tel que revendiqué dans l'une des revendications 6 à 8, **caractérisé en ce que** le carénage (7) comprend par ailleurs une partie formant protège-jambe (7b) qui couvre un tube avant (2a) du cadre (2) par l'arrière, et **en ce que** le second bouchon (10b) est disposé sous une partie d'extrémité inférieure de ladite partie formant protège-jambe (7b).

10. Motocycle tel que revendiqué dans la revendication 9, **caractérisé en ce que** le recouvrement de bouchon (11e) comprend une partie de verrouillage (11) qui peut être verrouillée et détachée d'une partie de verrouillage (7e) formée dans la partie formant protège-jambe (7b) du carénage (7).

11. Motocycle tel que revendiqué dans l'une des revendications 6 à 10, **caractérisé en ce que** l'élément de réception (11) est fixé au carénage (7) et **en ce que** le carénage (7) est fixé au cadre (2).

12. Motocycle tel que revendiqué dans l'une des revendications 1 à 11, **caractérisé en ce que** le premier réservoir pour liquide (10) est un réservoir pour carburant, et **en ce que** le premier bouchon (10b) est un bouchon d'alimentation en carburant pour ouvrir et fermer un orifice d'alimentation en carburant du réservoir pour carburant.
